Europäisches Patentamt

European Patent Office

Office européen des brevets

(11) Veröffentlichungsnummer: **0 187 250**
**A2**

# EUROPÄISCHE PATENTANMELDUNG

(21) Anmeldenummer: 85115151.4

(22) Anmeldetag: 29.11.85

(51) Int. Cl.⁴: **C08F 210/02** ,
//(C08F210/02,220:12,222:04)

(30) Priorität: 04.12.84 DE 3444094

(43) Veröffentlichungstag der Anmeldung:
16.07.86 Patentblatt 86/29

(84) Benannte Vertragsstaaten:
AT BE DE FR GB NL

(71) Anmelder: BASF Aktiengesellschaft
Carl-Bosch-Strasse 38
D-6700 Ludwigshafen(DE)

(72) Erfinder: Ziegler, Walter, Dr.
Starenweg 15
D-6803 Edingen-Neckarhausen(DE)
Erfinder: Reimann, Horst, Dr.
Adelheidstrasse 26
D-6520 Worms 1(DE)
Erfinder: Brandstetter, Franz, Dr.
Ritterbueschel 45
D-6730 Neustadt(DE)
Erfinder: Seiler, Erhard, Dr.
Erpolzheimer Strasse 1
D-6700 Ludwigshafen(DE)

(54) Copolymerisate des Ethylens.

(57) Die Erfindung betrifft Terpolymerisate des Ethylens die auf 100 Mol Ethylen 8,5 bis 16,3 Mol eines $C_1$-bis $C_4$-(Meth)acrylsäurealkylesters und 0,2 bis 2,0 Mol eines mit Ethylen copolymerisierbaren olefinisch ungesättigten cyclischen Carbonsäureanhydrids, bevorzugt Maleinsäureanhydrid, einpolymerisiert enthalten.

EP 0 187 250 A2

Copolymerisate des Ethylens

Die Erfindung betrifft Copolymerisate des Ethylens, die neben Ethylen und (Meth)acrylsäureestern noch andere mit Ethylen copolymerisierbare Monomere einpolymerisiert enthalten.

Copolymerisate des Ethylens, die Alkylester der (Meth)acrylsäure enthalten, sind beispielsweise aus dem GB-Patent 870480 bekannt. Des weiteren kennt man Terpolymerisate des Ethylens mit (Meth)acrylsäureestern, die noch weitere Comonomere wie beispielsweise Acrylsäure einpolymerisiert enthalten, aus der Literaturstelle EP-A1-106999.

Im allgemeinen besitzen diese Produkte zufriedenstellende Eigenschaften. Wünscht man aber eine hohe Haftneigung dieser Produkte auf unterschiedlichsten Materialien und zugleich eine niedrige Glastemperatur, so sind die in den obengenannten Schriften beschriebenen Copolymerisate nicht geeignet.

Der Erfindung lag daher die Aufgabe zugrunde, Ethylen-(Meth)acrylsäurealkylester-Copolymerisate zu schaffen, die eine hohe Haftung aufweisen und eine niedrige Glastemperatur besitzen.

Diese Aufgabe wird erfindungsgemäß durch Terpolymerisate gemäß Patentansprüchen 1 bis 5 gelöst.

Die Herstellung der Ethylen-(Meth)acrylsäurealkylester-Terpolymerisate kann nach herkömmlichen üblichen Hochdruckpolymerisationsverfahren erfolgen [vgl. Ullmanns Enzyklopädie der technischen Chemie, 4. Auflage, Band 19 (1980), Seiten 169 bis 175, Verlag Chemie GmbH, D-6940 Weinheim]. Die Terpolymerisation des Ethylens mit dem Ester der (Meth)acrylsäure und dem mit Ethylen copolymerisierbaren cyclischen Anhydrid erfolgt bei Drücken von 350 bis 5000 bar, vorzugsweise 1500 bis 3000 bar. Bei der Herstellung der erfindungsgemäßen Terpolymerisate des Ethylens arbeitet man im besonderen bei Drücken von 2000 bis 3000 bar. Die Temperaturen im Polymerisationssystem liegen zwischen 50 und 450°C, vorzugsweise zwischen 150 und 350°C. Die Bedingungen im Polymerisationssystem lassen sich apparativ in sogenannten Rohrreaktoren oder Autoklaven einstellen. Unter Rohrreaktoren versteht man rohrförmige Polymerisationsgefäße, deren Längenausdehnung das über 2000fache, bevorzugt 54000 bis 50.000fache des Rohrdurchmesser beträgt. Wie üblich, wird ein Teil der Polymerisationswärme durch Kühlung des Rohrreaktors mit Wasser von außen abgeführt. Autoklaven sind Druckgefäße mit einem Längen/Durchmesser-Verhältnis von 1 bis ca. 20. Besonders geeignet für die Herstellung der erfindungsgemäßen Terpolymerisate des Ethylens sind Rohrreaktoren und hierbei vor allem Einzonen- bzw. Zweizonen-Rohrreaktoren und Autoklaven. Ganz besonders sind ein Einzonen-Rohrreaktor und Autoklaven geeignet.

Die Terpolymeristion des Ethylens mit den Estern der (Meth)acrylsäure und dem mit Ethylen copolymerisierbaren cyclischen Anhydrid erfolgt in Gegenwart radikalischer Initiatoren. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 10 bis 200 mol ppm bezogen auf das zu polymerisierende Ethylen. In Betracht kommen außerdem Peroxide und andere radikalbildende Verbindungen sowie Gemische von Peroxiden, die unterschiedliche Zerfallstemperaturen haben und Hydroperoxide, vor allem aber auch Mischungen aus Sauerstoff und Peroxiden und/oder Hydroperoxiden. Als Beispiele für Peroxide und Hydroperoxide seien genannt: Tert.-butylperpivalat, Di-tert.butylperoxid, Tert.-butylhydroperoxid, Tert.-butylperbenzoat, Dilauroylperoxid und Tert.-butylperisononanat. Unter radikalischen Polymerisationsinitiatoren sollen auch Verbindungen wie beispielswiese Azo-iso-buttersäuredinitril verstanden werden. Man kann auch Mischungen aus Sauerstoff von einem oder mehreren Peroxiden verwenden. Besonders geeignet sind Peroxide, wie Ditert.-butylperoxid, Tert.-butylperpivalat und Tert.-butylperisononanat.

Das Molekulargewicht des anfallenden Terpolymerisat kann durch die üblichen Regler, z.B. Kohlenwasserstoffe wie Propan, Propen etc., Ketone wie Aceton, Methylethylketone etc. oder Aldehyde wie Propionaldehyd, auf den gewünschten Wert gebracht werden. Besonders eignet sich hierbei Propionaldehyd.

Die Terpolymerisation wird im allgemeinen in Abwesenheit eines Lösungsmittels durchgeführt. Die geringen Mengen eines inerten Lösungsmittels, wie Benzol, Mineralöle oder andere inerte Lösungsmittel, in denen die Polymerisationsinititatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Als Ester der Acryl- bzw. Methacrylsäure kommen Ester von Alkoholen mit 1 bis 8 Kohlenstoffatomen in Frage. Ganz besonders zeichnet sich der Ester der Acrylsäure mit n-Butanol und Ethylhexanol aus. Es können aber auch Mischungen aus verschiedenen Estern der Acryl- oder Methacrylsäure verwendet werden. Die Terpolymerisate des Ethylens enthalten 8,5 bis 16,3 Mol, vorzugsweise 9,2 bis 13,7 Mol Ester der (Meth)acrylsäure auf 100 Mol Ethylen einpolymerisiert.

Als weiteres Comonomeres kommen alle mit Ethylen copolymerisierbaren olefinisch ungesättigten cyclischen Carbonsäurenanhydride in Frage. Geeignet sind z.B. Itakonsäureanhydrid, Citrakonsäureanhydrid oder Maleinsäureanhydrid. Ganz besonders ist Maleinsäureanhydrid geeignet. Bei der Herstellung der erfindungsgemäßen Terpolymerisate sind die ungesättigten cyclischen Carbonsäureanhydride bevorzugt in den Estern der (Meth)acrylsäure gelöst und werden in Lösung dem Polymerisationssystem zudosiert.

Die Terpolymerisate des Ethylens enthalten einpolymerisiert auf 100 Mol Ethylen 0,2 bis 2 Mol cyclisches Anhydrid, vorzugsweise 0,3 bis 1,5 Mol.

Die erfindungsgemäßen Terpolymerisate des Ethylens haben Schmelzindices von < 1000 g/10', vorzugsweise im Bereich von 6 bis 60 g/10', besonders aber im Bereich von 8 bis 25 g/10', gemessen nach DIN 53 735 bei 190°C und 2,16 kp. Die Bestimmung des Anteils an cyclischem Anhydrid erfolgt durch Titration analog der Säurezahlbestimmung nach DIN 53 402. Als Lösungsmittel wird hierbei Ethylbenzol gewählt. Die Glastemperatur der Terpolymerisate liegt unterhalb von -30°C, bevorzugt zwischen -35 und -55°C. Die Bestimmung der Glasübergangstemperatur erfolgte anhand des Schubmoduls gemäß DIN 53 455.

Zur Bestimmung der Hafteigenschaften werden die Terpolymerisate zwischen 2 Folien aus Polyethylenterephthalat bei 220°C 5 Minuten verpreßt. Durch Auseinanderziehen der beiden Polyethylenterephthalat-Folien wird dann die Haftung geprüft.

Beispiele und Vergleichsversuche

Die in der Tabelle 1 angegebenen Mengen an Ethylen, n-Butylacrylat, Maleinsäureanhydrid bzw. Acrylsäure mit einer Temperatur von 145°C werden kontinuierlich durch einen röhrenförmigen Reaktor mit einem Längen-/ Durchmesserverhältnis von 14000 geleitet. Durch die kontinuierliche Zugabe der in der Tabelle 1 angegebenen Menge an Di-tert.-butylperoxid (gelöst in Isododecan) wurde eine maximale Temperatur von 250°C erreicht. Wie man den Werten der Tabelle 2 entnehmen kann, besitzen die erfindungsgemäßen Terpolymerisate eine niedrigere Glastemperatur bei guter Haftung im Gegensatz zu den Vergleichsterpolymerisaten.

Tabelle 1

Tabelle 1

| Beispiel | Ethylen-durchsatz (kg/h) | n-Butylacrylat (kg/h) | Maleinsäure-anhydrid (kg/h) | Umsatz Gew.% bez. auf Ethylen | Di-tert.-butyl-peroxid (g/h) | Polymeraufbau | |
|---|---|---|---|---|---|---|---|
| | | | | | | Mol n-Butyl-acrylat pro 100 Mol Ethylen | Mol Maleinsäureanhydrid pro 100 Mol Ethylen |
| 1 | 1400 | 51,9 | 3,03 | 0,3 | 84 | 10,5 | 1,13 |
| 2 | 1400 | 61,8 | 1,76 | 10,4 | 42,8 | 10,5 | 0,64 |
| 3 | 1400 | 55,6 | 0,78 | 10,4 | 41,6 | 10,1 | 0,42 |
| Vergleichsversuch | | | Acrylsäure (kg/h) | | | | Mol Acrylsäure pro 100 Mol Ethylen |
| A | 1400 | 50,6 | 19,7 | 11,8 | 71 | 10,7 | 2,79 |
| B | 1400 | 64,9 | 12,6 | 12,5 | 60,6 | 10,9 | 1,42 |
| C | 1400 | 54 | 21 | 12,5 | 56,8 | 11,9 | 1,37 |

0 187 250

Tabelle 2

| Beispiel | Glastemperatur (°C) | Haftung[1] |
|----------|---------------------|-----------|
| 1 | −38 | + |
| 2 | −42 | + |
| 3 | −40 | + |
| Vergl.Vers. | | |
| A | −28 | − |
| B | −30 | − |
| C | −32 | − |

[1] + Gute Haftung;
  − keine Haftung

**Ansprüche**

1. Terpolymerisate des Ethylens, die auf 100 Mol Ethylen 8,5 bis 16,3 Mol eines $C_1$- bis $C_r$-(Meth)acrylsäurealkylesters und 0,2 bis 2,0 Mol eines mit Ethylen copolymerisierbaren olefinisch ungesättigten cyclischen Carbonsäureanhydrids einpolymerisiert enthalten.

2. Terpolymerisate nach Anspruch 1, dadurch gekennzeichnet, daß 9,2 bis 13,7 Mol Ester der (Meth)acrylsäure einpolymerisiert sind.

3. Terpolymerisate nach Anspruch 1, dadurch gekennzeichnet, daß 0,3 bis 1,5 Mol cyclisches Carbonsäureanhydrid einpolymerisiert sind.

4. Terpolymerisate nach Anspruch 1, dadurch gekennzeichnet, daß Ester der Acrylsäure mit n-Butanol oder Ethylhexanol einpolymerisiert sind.

5. Terpolymerisate nach Anspruch 1, dadurch gekennzeichnet, daß Maleinsäureanhydrid einpolymerisiert ist.